# Europäisches Patentamt

## European Patent Office

## Office européen des brevets

(19)

(11) Veröffentlichungsnummer: **0 017 036**
**B1**

(12) **EUROPÄISCHE PATENTSCHRIFT**

(45) Veröffentlichungstag der Patentschrift:
**16.03.83**

(51) Int. Cl.³: **B 01 L 3/02,** F 04 B 9/12,
G 01 F 11/02

(21) Anmeldenummer: **80101282.4**

(22) Anmeldetag: **12.03.80**

(54) **Dosierspritze.**

(30) Priorität: **20.03.79 DE 2910946**

(43) Veröffentlichungstag der Anmeldung:
**15.10.80 Patentblatt 80/21**

(45) Bekanntmachung des Hinweises auf die Patenterteilung:
**16.03.83 Patentblatt 83/11**

(84) Benannte Vertragsstaaten:
**BE FR GB NL**

(56) Entgegenhaltungen:
**DE-A-1 703 061**
**DE-A-1 902 297**
**DE-A-1 922 809**
**DE-A-2 534 237**
**FR-A-1 270 070**
**GB-A-226 589**
**US-A-2 814 422**
**US-A-3 180 527**
**US-A-4 047 850**

(73) Patentinhaber: **SIEMENS AKTIENGESELLSCHAFT,**
**Berlin und München Wittelsbacherplatz 2,**
**D-8000 München 2 (DE)**

(72) Erfinder: **Heyneman, Guido, Ing. grad., 8-Meilann 48,**
**B-8300 Knokke (BE)**

Dosierspritze

Die Erfindung bezieht sich auf eine Dosierspritze zum Überführen von flüssigen Medien mit vorgegebenem Volumen von einem Gefäss in ein anderes, bestehend aus einer mit einem Ventilblock in Verbindung stehenden Kolbenbürette mit pneumatischem Antrieb, wobei die Kolbenbürette, der Ventilblock und der pneumatische Antrieb eine Baueinheit bilden, wobei am freien Ende der Kolbenstange der Kolbenbürette der Kolben für den pneumatischen Antrieb angeordnet ist und wobei der Durchmesser der Kolbenstange im Verhältnis zum Durchmesser des Kolbens für den pneumatischen Antrieb so gross gewählt ist, dass sich die beiden pneumatisch wirksamen Flächen des Kolbens des pneumatischen Antriebs voneinander unterscheiden.

Eine Dosierspritze dieser Art ist durch die US-A-4 047 850 bekanntgeworden. Bei dieser bekannten Dosierspritze dient der mit der Kolbenbürette in Verbindung stehende Ventilblock nicht nur zur Steuerung des zu überführenden Mediums, sondern auch zur Steuerung des pneumatischen Antriebs. Zu diesem Zwecke weist der Steuerkolben des Ventilblockes mehrere Ringnuten auf, die mit entsprechenden Bohrungen für das Medium und für die Druckluftzuführung zu den beiden Seiten des Kolbens für den pneumatischen Antrieb zum Fluchten gebracht werden. Nachteilig bei dieser bekannten Dosierspritze ist die aufwendige Bauweise und das Auftreten von Dichtungsproblemen zwischen den verschiedene Medien führenden Ringnuten. Ausserdem werden zur Steuerung zwei Ventile benötigt, die die Stirnseiten des Steuerkolbens wechselseitig beaufschlagen. Nach dem Abschalten der Druckluft für die Steuerbewegung des Steuerkolbens ist nicht mehr erkennbar, ob sich der Kolben in der einen oder der anderen Endstellung befindet. Um aber Fehlschaltungen mit Sicherheit zu verhindern, ist man gezwungen, besondere Stellungsanzeiger vorzusehen, die anzeigen, in welcher Stellung sich der Kolben gerade befindet. Derartige Massnahmen erhöhen jedoch den Aufwand ganz beträchtlich.

Durch die DE-A-2 534 237 ist eine Kolbenpumpe bekanntgeworden, bei der am freien Ende der Kolbenstange der Kolbenpumpe der Kolben für den pneumatischen Antrieb angeordnet ist, wobei der Durchmesser des Kolbens für den pneumatischen Antrieb so abgesetzt ist, dass sich die beiden pneumatisch wirksamen Flächen des Kolbens voneinander unterscheiden. Zur Steuerung der Kolbenbewegung ist an der Kolbenpumpe ein Ventil mit einem hin- und hergehenden Kolben angebaut, welcher in Abhängigkeit von der Bewegung des Kolbens des pneumatischen Antriebs so gesteuert wird, dass die hin- und hergehende Bewegung des Kolbens des pneumatischen Antriebs und damit auch der Kolben der Kolbenpumpe ständig aufrechterhalten wird.

Der Erfindung liegt die Aufgabe zugrunde, eine Dosierspritze der eingangs beschriebenen Art zu schaffen, die einfach im Aufbau ist, eine kompakte, raumsparende Bauweise zulässt und bei der die Kolbenstellung ohne zusätzliche Stellungsanzeiger durch den Programmgeber sofort erkennbar ist.

Die erfindungsgemässe Dosierspritze ist dadurch gekennzeichnet, dass die Kolbenseite mit der geringeren wirksamen Fläche ständig mit Druckluft aus einer Druckluftanlage beaufschlagt ist, während die Kolbenseite mit der grösseren wirksamen Kolbenfläche zwecks Steuerung der Kolbenbewegung über ein vorzugsweise druckluftbetätigtes Steuerventil mit der Druckluftanlage in Verbindung steht.

Vorzugsweise enthält der auf dem Glaszylinder der Kolbenbürette aufgesetzte Ventilblock neben Ein- und/oder Auslaufstutzen ein pneumatisch gesteuertes Schieberventil, dessen Schieber vorzugsweise normal zur Bewegungsachse der Kolbenbürette bewegbar ist und zu beiden Seiten des Schiebers Kolben mit unterschiedlichen Durchmessern angeordnet sind, wobei der Kolben mit dem geringeren Durchmesser ständig mit Druckluft aus einer Druckluftanlage beaufschlagt ist, während der Kolben mit dem grösseren Durchmesser zur Steuerung der Schieberbewegung über ein druckluftbetätigtes Ventil mit der Druckluftanlage in Verbindung steht.

Eine besonders einfache Steuerung ergibt sich im Zusammenhang mit dem zuvor erwähnten druckluftbetätigten Ventil dadurch, dass die entsprechenden Anschlüsse für die Kolben des Schieberventils mit den entsprechenden Anschlüssen des pneumatischen Antriebs der Kolbenbürette verbunden sind, wobei in die Zuführungen zum pneumatischen Antrieb der Kolbenbürette Drosselventile eingeschaltet sind.

Weitere Einzelheiten und Merkmale der Erfindung ergeben sich aus der nachfolgenden Beschreibung eines in der Zeichnung dargestellten Ausführungsbeispiels. Es zeigen:

Fig. 1 eine Schnittansicht durch eine Dosierspritze,

Fig. 2 eine Seitenansicht und

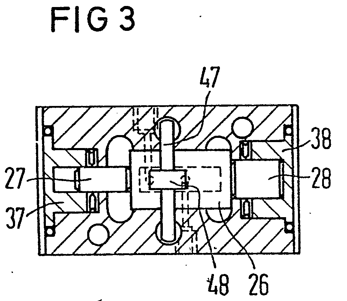

Fig. 3 einen Schnitt nach der Linie III–III der Fig. 1.

Die Dosierspritze gemäss der Erfindung besteht aus einem Ventilblock 1, der am oberen Ende einer Kolbenbürette 2 aufgesetzt ist, und einem pneumatischen Antrieb 3. Im Glaszylinder 4 der Kolbenbürette befindet sich ein Kolben 5, der eine Kolbenstange 6 aufweist. Am unteren Ende der Kolbenstange 6 ist ein Kolben 7 für den pneumatischen Antrieb 3 angeordnet, der in einer zylindrischen Bohrung 8 eines vorzugsweise quaderförmigen Gehäuses 9 gleitet. Im Kolben 7 ist in einer Ringnut ein Dichtungsring 10 angeordnet. Die zylindrische Bohrung 8 ist durch einen Deckel 11 abgeschlossen, wobei ein O-Ring 12 für vollkommen dichten Abschluss sorgt. In gleicher Weise ist im Gehäuse 9 ein Dichtungsring 13 vorgesehen, der die zylindrische Bohrung 8 gegen die Kolbenbürette 2 abdichtet. Mit 14 und 15 sind die Anschlussbohrungen für die pneumatischen Anschlüsse bezeichnet. Diese beiden Anschlussbohrungen befinden sich ausserhalb der beiden Totpunktlagen des Kolbens 7.

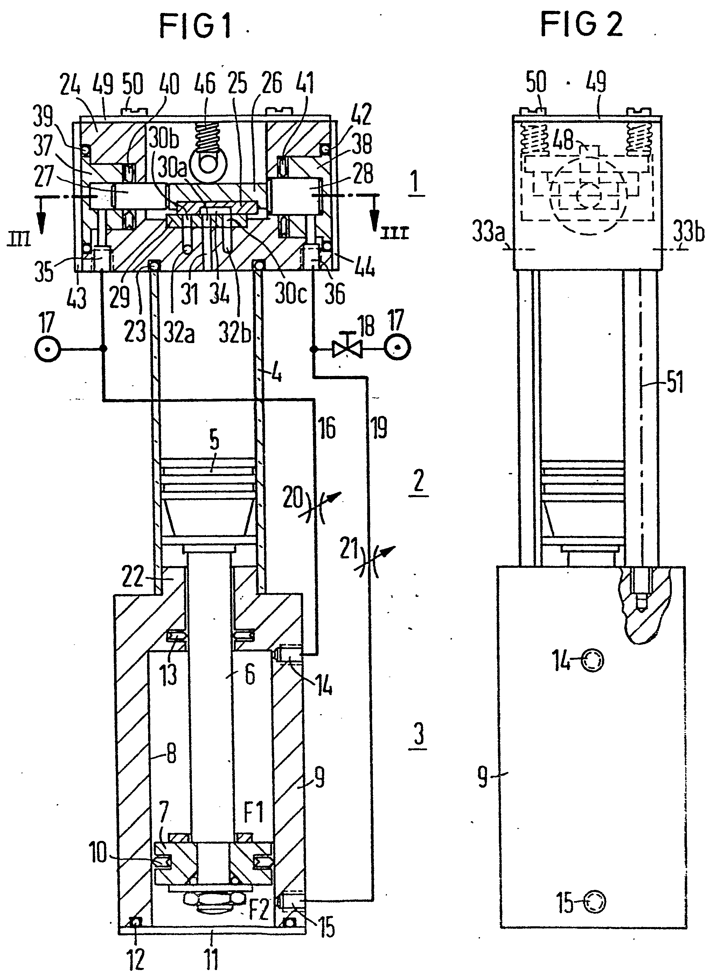

Wie sich aus Fig. 1 ergibt, ist der Durchmesser der Kolbenstange 6 im Verhältnis zum Durchmesser des Kolben 7 so gewählt, dass sich die beiden pneumatisch wirksamen Flächen F1 und F2 zu beiden Seiten des Kolbens wesentlich voneinander unterscheiden. Dadurch ergibt sich die Möglichkeit, dass die Kolbenseite mit der geringeren wirksamen Fläche F1 ständig über eine Leitung 16 mit Druckluft aus einer Druckluftanlage 17 beaufschlagt wird, während die Kolbenseite mit der grösseren wirksamen Kolbenfläche F2 zwecks Steuerung der Kolbenbewegung über ein vorzugsweise druckluftbetätigtes Steuerventil 18 mit der Druckluftanlage 17 in Verbindung steht. Mit 19 ist die entsprechende Leitung bezeichnet. Wie später noch erläutert werden wird, sind in den Verbindungsleitungen 16 und 19 Drosselventile 20 und 21 eingebaut.

Ist also das Ventil 18 gesperrt, so steht die Kolbenfläche F1 ständig über Leitung 16 mit der Druckluftanlage 17 in Verbindung, so dass der Kolben 7 die in Fig. 1 gezeigte Stellung einnimmt. Wird nun das Ventil 18 geöffnet, so erhält die untere Kolbenfläche F2 über Leitung 19 Druckluft und da die Fläche F2 mindestens doppelt so gross ist wie die Fläche F1 wird der Kolben 7 nach oben bewegt, auch wenn die andere Kolbenfläche F1 über Leitung 16 noch weiterhin von der Druckluftanlage 17 beaufschlagt wird. An der Einschaltstellung des Ventils 18 erkennt man also sofort, ob sich der Kolben 5 der Kolbenbürette 2 in der unteren oder in der oberen Stellung befindet.

Wesentlich ist ferner noch, dass die Kolbenstange 6 keine eigene Führung aufweist. Das Gehäuse 9 steht unmittelbar mit dem Glaszylinder 4 der Motorkolbenbürette 2 in Verbindung, und zwar über einen Kragen 22, auf den der Glaszylinder 4 aufgeschoben ist. Das andere Ende des Glaszylinders 4 ist über eine Ringdichtung 23 mit einem Gehäuse 24 des Ventilblocks 1 verbunden.

Der Ventilblock 1 enthält ein druckluftbetätigtes Schieberventil, wobei sich ein Schieber 25 in senkrechter Richtung zur Bewegung der Kolben 5 und 7 bewegt. Der Schieber 25 ist in einem Schieberhalter 26 eingelegt, welcher unter der Wirkung von beidseitig angeordneten Kolben 27 und 28 steht. Die Durchmesser der Kolben 27 und 28 weisen unterschiedliche Durchmesser auf, so dass eine Art Differentialwirkung zustandekommt, wie bei dem Kolben 7 des pneumatischen Antriebs 3. Der Schieber 25 gleitet auf einer Druckplatte 29, die drei Bohrungen 30a bis 30c aufweist, die sich normal zur Bewegungsrichtung des Schiebers 25 erstrecken. Die Bohrung 30a steht über eine Bohrung 31 mit dem Innenraum des Glaszylinders 4 in Verbindung, während die beiden aussenliegenden Bohrungen 30b und 30c über Bohrungen 32a und 32b mit Anschlussbohrungen 33a und 33b in Verbindung stehen, die zu beiden Seiten des Gehäuses 24 herausgeführt sind. Der Schieber 25 besitzt eine Längsnut 34, die so bemessen ist, dass sie jeweils zwei Bohrungen 30a und 30b bzw. 30a und 30c miteinander verbinden kann.

Die Kolben 27 und 28 stehen über Anschlussbohrungen 35 und 36 mit der Druckluftanlage 17 in Verbindung und zwar derart, dass der Kolben 27 mit dem geringeren Durchmesser und daher mit der geringeren wirksamen pneumatischen Fläche über die Leitung 16 ständig mit der Druckluftanlage 17 in Verbindung steht, mit der auch die Anschlussbohrung 14 des pneumatischen Antriebs 3 in Verbindung steht. Hingegen ist die Anschlussbohrung 36 einerseits mit der Anschlussleitung 19 und anderseits über das Ventil 18 mit der Druckluftanlage 17 verbunden. Der Kolben 27 wird also ständig mit Druckluft beaufschlagt, während der Kolben 28 über das Ventil 18 gesteuert wird, und zwar gleichzeitig mit dem pneumatischen Antrieb 3. Damit sichergestellt wird, dass mit Sicherheit das Ventil 1 geschaltet hat, bevor die Kolbenbürette 2 in Tätigkeit tritt, sind die beiden Drosselventile 20 und 21 vorgesehen.

In der in Fig. 1 gezeigten Stellung ist also das Ventil 18 geschlossen und die zugehörigen Kolbenseiten sind entlüftet. Hingegen ist der Kolben 27 ständig von Druckluft beaufschlagt, so dass er die in Fig. 1 dargestellte Stellung einnimmt. Desgleichen ist die Kolbenseite F1 ständig von Druckluft beaufschlagt, so dass ebenfalls der Kolben 7 seine untere Stellung einnimmt. Wird nun das Ventil 18 geöffnet, so erhält der Kolben 28 unmittelbar die Druckluft, während die Kolbenseite F2 des Kolbens 7 erst später den vollen Druck erhält, da sich der Luftdruck infolge der Einschaltung des Drosselventiles 21 erst allmählich aufbaut. Die erheblich grössere Kolbenfläche des Kolbens 28 bewirkt, dass der Schieber 25 in bezug auf Fig. 1 nach links bewegt wird, wobei die Kraft des Kolbens 27 überwunden wird. Inzwischen hat sich der Druck an der Fläche F2 des Kolbens 7 so weit aufgebaut, dass der Kolben 7 und damit auch der Kolben 5 in Tätigkeit gesetzt wird.

Beim Abschalten des Ventiles 18 wird der Raum hinter dem Kolben 28 sofort entlüftet, so dass unter der Wirkung des Kolbens 27 die Schieberbewegung unmittelbar einsetzt, während sich der Druck hinter der Kolbenfläche F1 infolge der Einschaltung des Drosselventiles 20 erst allmählich aufbaut bzw. infolge des Drosselventiles 21 der Druck an der Kolbenfläche F2 erst langsam abgebaut wird; erst dann setzt die Bewegung des Kolbens 7 nach unten ein.

Die Kolben 27 und 28 sind in Deckeln 37 und 38 geführt, welche wiederum mit Hilfe von Ringdichtungen 39 bis 42 einerseits gegen die Kolben 27 und 28 und anderseits gegen das Gehäuse 24 abgedichtet sind. Mit Hilfe der Deckplatten 43 und 44 sind die Deckel 37 und 38 bzw. die Dichtungen 39 und 42 gehalten. Der in dem Schieberhalter 26 eingelegte Schieber 25 steht unter der Wirkung von Druckfedern 46, die auf eine Achse 47 einwirken, und zwar zur Verminderung der Reibung über ein Kugellager 48. Die Federn 46 stützen sich hierbei gegen eine Deckplatte 49 ab, die mit Hilfe von Schrauben 50 auf dem Gehäuse 24 befestigt ist.

Wie sich aus der Zeichnung ergibt, ist der Ventilblock 24 ebenfalls quaderförmig ausgebildet und steht mit dem Gehäuse 9 des pneumatischen Antriebs über Zugschrauben 51 in Verbindung, so dass eine geschlossene kompakte Baueinheit entsteht.

**Patentansprüche**

1. Dosierspritze zum Überführen von flüssigen Medien mit vorgegebenem Volumen von einem Gefäss in ein anderes, bestehend aus einer mit einem Ventilblock in Verbindung stehenden Kolbenbürette mit pneumatischem Antrieb, wobei die Kolbenbürette, der Ventilblock und der pneumatische Antrieb eine Baueinheit bilden, wobei am freien Ende der Kolbenstange der Kolbenbürette der Kolben für den pneumatischen Antrieb angeordnet ist und wobei der Durchmesser der Kolbenstange im Verhältnis zum Durchmesser des Kolbens für den pneumatischen Antrieb so gross gewählt ist, dass sich die beiden pneumatisch wirksamen Flächen des Kolbens des pneumatischen Antriebs voneinander unterscheiden, dadurch gekennzeichnet, dass die Kolbenseite mit der geringeren wirksamen Kolbenfläche (F1) ständig mit Druckluft aus einer Druckluftanlage (17) beaufschlagt ist, während die Kolbenseite mit der grösseren wirksamen Kolbenfläche (F2) zwecks Steuerung der Kolbenbewegung über ein vorzugsweise druckluftbetätigtes Steuerventil (18) mit der Druckluftanlage (17) in Verbindung steht.

2. Dosierspritze nach Anspruch 1, dadurch gekennzeichnet, dass der auf einem Glaszylinder (4) der Kolbenbürette (2) aufgesetzte Ventilblock (1) neben Ein- und/oder Auslaufstutzen (33a, 33b) ein pneumatisch gesteuertes Schieberventil enthält, dessen Schieber (25) normal zur Bewegungsachse der Kolbenbürette (2) bewegbar ist und zu beiden Seiten des Schiebers (25) Kolben (27, 28) mit unterschiedlichen Durchmessern angeordnet sind, wobei der Kolben (27) mit dem geringeren Durchmesser ständig mit Druckluft aus einer Druckluftanlage (17) beaufschlagt ist, während der Kolben (28) mit dem grösseren Durchmesser zur Steuerung der Schieberbewegung über ein druckluftbetätigtes Ventil (18) mit der Druckluftanlage (17) in Verbindung steht.

3. Dosierspritze nach Anspruch 1 oder 2, dadurch gekennzeichnet, dass die entsprechenden Anschlüsse (35, 36) für die Kolben (27, 28) des Schieberventils mit den entsprechenden Anschlüssen (14, 15) des pneumatischen Antriebs (3) der Kolbenbürette (2) verbunden sind, wobei in die Zuführungen (16, 19) zum pneumatischen Antrieb (3) der Kolbenbürette (2) Drosselventile (20, 21) eingeschaltet sind.

4. Dosierspritze nach einem der Ansprüche 1 bis 3, dadurch gekennzeichnet, dass der Ventilblock (1) und das Gehäuse (9) des pneumatischen Antriebs (3) quaderförmig ausgebildet sind und mit Hilfe mindestens zweier Zugstangen (51) gegen die Enden des Glaszylinders (4) der Kolbenbürette (2) gezogen sind.

5. Dosierspritze nach einem der Ansprüche 2 bis 4, dadurch gekennzeichnet, dass der Schieber (25) auswechselbar in einem Schieberhalter (26) angeordnet ist.

**Claims**

1. A dosing syringe for the transfer of liquid media at a predetermined volume from one vessel into another, consisting of a piston burette with a pneumatic drive in combination with a valve block, in which the piston burette, the valve block and the pneumatic drive form a structural unit, in which at the free end of the piston rod of the piston burette, there is arranged the piston of the pneumatic drive, and in which the diameter of the piston rod is arranged to be so large relative to the diameter of the piston of the pneumatic drive that the two pneumatically-effective surfaces of the piston of the pneumatic drive differ from one another, characterised in that the face of the piston which has the smaller effective piston surface (F1) is continuously supplied with compressed air from a compressed air system (17), whilst the face of the piston which has the larger effective piston surface (F2) is connected controlling the piston movement, to the compressed air system (17) through a control valve (18) which is preferably arranged to be actuated by compressed air.

2. A dosing syringe according to Claim 1, characterised in that, in addition to an inlet nozzle and/or outlet nozzle (33a, 33b), the valve block (1), which is mounted on a glass cylinder (4) of the piston burette (2), comprises a pneumatically-controlled slide valve, the slide (25) of which can be moved at right angles towards the axis of motion of the piston burette (2), and pistons (27, 28) having different diameters are arranged on both sides of the slide (25), the piston (27) having the smaller diameter being continuously supplied with compressed air from a compressed air system (17), whilst the piston (28) having the larger diameter is connected through a valve (18) which is actuated by compressed air, to the compressed air system (17) in order to control the movement of the slide.

3. A dosing syringe according to Claim 1 or 2, characterised in that the corresponding connections (35, 36) for the pistons (27, 28) of the slide valve, are connected to the corresponding connections (14, 15) of the pneumatic drive (3) of the piston burette (2), throttle valves (20, 21) being inserted into the supply lines (16, 19) to the pneumatic drive (3) of the piston burette (2).

4. A dosing syringe according to one of Claims 1 to 3, characterised in that the valve block (1) and the housing (9) of the pneumatic drive (3) have the form of a parallelepiped and are pulled towards the ends of the glass cylinder (4) of the piston burette (2) with the aid of at least two tension rods (51).

5. A dosing syringe according to one of Claims 2 to 4, characterised in that the slide (25) is exchangeably arranged in a slide holder (26).

**Revendications**

1. Pompe de dosage pour transvaser des milieux liquides d'un volume donné à l'avance, d'un récipient dans un autre, constituée d'une burette à piston à entraînement pneumatique et communiquant avec un bloc distributeur et régulateur, la burette à piston, le bloc distributeur et régulateur et l'entraînement pneumatique formant une unité, le piston pour l'entraînement pneumatique étant disposé à l'extrémité libre de la tige du piston de la burette, et le diamètre de la tige du piston étant choisi assez grand par rapport au diamètre du piston pour l'entraînement pneumatique, pour que les deux surfaces pneumatiquement efficaces du piston de l'entraînement pneumatique sont différentes l'une de l'autre, caractérisée en ce que le côté du piston ayant la surface (F1) de piston active la plus petite est chargée constamment par de l'air comprimé provenant des installations (17) d'air comprimé, tandis que la partie du piston ayant la surface (F2) de piston active la plus grande communique, en vue de la commande du mouvement du piston, avec l'installation (17) d'air comprimé de préférence par l'intermédiaire d'une vanne (18) pilote à commande à air comprimé.

2. Pompe de dosage suivant la revendication 1, caractérisée en ce que le bloc (1) distributeur et régulateur, placé sur un cylindre (4) en verre de la burette (2) à piston contient, outre des tubulures (33 à 33b) d'entrée et/ou de sortie, une vanne à coulisse, commandée pneumatiquement, dont la coulisse (25) peut être déplacée normalement à l'axe de déplacement de la burette (2) à piston et, des deux côtés de la coulisse (25) sont disposés des pistons (27, 28) de diamètre différent, le piston (27) ayant le diamètre le plus petit étant chargé constamment par de l'air comprimé provenant d'une installation (17) à air comprimé, tandis que le piston (28) ayant le diamètre le plus grand communique, pour la commande du déplacement de la coulisse, avec l'installation (17) à air comprimé par une vanne (18) à commande à air comprimé.

3. Pompe de dosage suivant la revendication 1 ou 2, caractérisée en ce que les raccords (35, 36) correspondants pour les pistons (27, 28) de la vanne à coulisse, communiquent avec les raccords (14, 15) correspondants de l'entraînement (3) pneumatique de la burette (2) à piston, des soupapes (20, 21) d'étranglement étant montées dans les conduits (16, 19) d'admission pour l'entraînement (3) pneumatique de la burette (2) à piston.

4. Pompe de dosage suivant l'une des revendications 1 à 3, caractérisée en ce que le bloc (1) distributeur et régulateur et l'enveloppe (9) de l'entraînement (3) pneumatique sont parallélépipédiques et sont tirés à l'aide d'au moins deux tiges (51) de traction contre les extrémités des cylindres (4) en verre de la burette (2) à piston.

5. Pompe de dosage suivant l'une des revendications 2 à 4, caractérisée en ce que la coulisse (25) est montée, de manière à pouvoir être échangée, dans un porte-coulisse (26).

# FIG 1

# FIG 2

FIG 3